(19) **Europäisches Patentamt**

**European Patent Office**

**Office européen des brevets**

(11) **EP 1 234 506 A1**

(12) **DEMANDE DE BREVET EUROPEEN**

(43) Date de publication:
**28.08.2002 Bulletin 2002/35**

(51) Int Cl.$^7$: **A23G 3/00**

(21) Numéro de dépôt: **02290370.2**

(22) Date de dépôt: **14.02.2002**

---

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.02.2001 FR 0102677**

(71) Demandeur: **Roquette Frères**
**62136 Lestrem (FR)**

(72) Inventeur: **Ribadeau-DUmas, Guillaume**
**59237 Verlinghem (FR)**

(74) Mandataire: **Vercaemer, Laurence**
**Cabinet Plasseraud,**
**84 rue d'Amsterdam**
**75440 Paris Cedex 09 (FR)**

---

(54) **Procédé d'enrobage de sucres cuits sans sucre**

(57) L'invention concerne un procédé d'enrobage de sucres cuits sans sucre, permettant la création d'un revêtement dur et translucide, comprenant l'application d'un sirop d'enrobage, caractérisé en ce que ledit sirop comprend au moins un polyol, au moins un polysaccharide de haut poids moléculaire et au moins une matière grasse.

Elle concerne également un sucre cuit sans sucre obtenu selon ledit procédé.

Elle concerne en outre un sirop d'enrobage caractérisé en ce qu'il comprend au moins un polyol, au moins un polysaccharide de haut poids moléculaire et au moins une matière grasse.

**EP 1 234 506 A1**

## EP 1 234 506 A1

**Description**

La présente invention a pour objet un procédé d'enrobage de sucres cuits sans sucre permettant la création aisée et rapide d'un revêtement à la surface d'un sucre cuit.

Elle vise également les sucres cuits enrobés obtenus selon ledit procédé.

Les sucres cuits, appelés aussi communément bonbons durs, sont des produits de confiserie solides et essentiellement amorphes.

En France et à l'étranger, nombreux sont aujourd'hui les confiseurs commercialisant des confiseries sans sucre. Leur objectif est de répondre aux attentes d'un nombre croissant de consommateurs plus soucieux que par le passé de leur alimentation et de leur hygiène de vie. Les débuts de la confiserie sans sucre remontent aux années 1950, quand les premiers sucres cuits industriels sont apparus sur le marché allemand. Il s'agissait de produits à base de sorbitol obtenus par coulage. Ce polyol remplaçait à la fois le sucre et les sirops de glucose traditionnellement employés dans cette application. Les sucres cuits au sorbitol sont des produits atypiques car essentiellement cristallins.

Par la suite, la mise au point du sirop de maltitol LYCASIN® 80/55, produit non cariogène et non cristallisable développé par la Demanderesse, a rendu possible la fabrication de bonbons durs totalement amorphes, et comparables aux sucres cuits traditionnels en termes d'état vitreux. Aujourd'hui, d'autres polyols sont apparus sur le marché avec leurs avantages et leurs inconvénients pour la fabrication de sucres cuits sans sucre.

Les sucres cuits sont des produits hygroscopiques qui, stockés dans des conditions normales de température et d'humidité, ont tendance à absorber l'humidité de l'atmosphère et de ce fait ont tendance à devenir collants. Pour éviter que les sucres cuits ne collent entre eux, ce qui les rendrait difficilement consommables, ils sont en général emballés individuellement par exemple au moyen de papillotes plus ou moins étanches à la vapeur d'eau. Les sucres cuits papillotés sont en général conditionnés dans des sachets qui contribuent également à faire une barrière plus ou moins étanche entre le sucre cuit et l'humidité de l'atmosphère, ce qui améliore encore la conservation des sucres cuits.

Les sucres cuits classiques les plus fréquemment rencontrés sur le marché, contenant environ 2 à 5% d'eau résiduelle et dont la matière sèche est en général composée de 10 à 60% de saccharose et de 40 à 90% de matière sèche de sirop de glucose, et les sucres cuits sans sucre essentiellement à base de sirops de maltitol sont en général emballés individuellement et conditionnés dans des sachets.

Pour réduire le coût de leurs matériaux d'emballage et pour répondre aux attentes des consommateurs qui recherchent des produits pratiques sans emballages individuels, les fabricants de sucres cuits ont toujours cherché à réduire leur hygroscopicité pour permettre leur commercialisation sans emballages individuels dans des emballages peu onéreux, comme les boites en carton par exemple.

Plusieurs solutions ont été développées. L'Isomalt a permis de répondre à ce souci de stabilité, ne rendant plus nécessaires les packagings étanches, sophistiqués et onéreux.

L'Isomalt est toutefois un produit onéreux et convient mal, de ce fait, comme agent de charge de produits fabriqués en grandes quantités.

D'autres solutions existent à l'heure actuelle pour pouvoir réaliser des sucres cuits suffisamment stables au stockage.

La première consiste à réaliser des sucres cuits à base de sorbitol. Ce polyol permet la réalisation de sucres cuits qui demeurent stables vis-à-vis de l'humidité grâce à une microcristallisation du polyol dans la masse et en surface. Cette microcristallisation n'est pas visible à l'oeil nu et le sucre cuit est translucide aussitôt après sa fabrication. Cependant, au cours du temps, il a tendance à blanchir en surface, ce qui diminue son attrait. De plus, les sucres cuits au sorbitol ne peuvent pas être formés, ils ne peuvent qu'être coulés et leur durcissement est très lent (en général plus d'une heure) car il s'agit d'un procédé de cristallisation. Le durcissement des autres sucres cuits vitreux n'est fonction que de la vitesse de refroidissement des sucres cuits et ne dure que quelques minutes.

La deuxième solution consiste à givrer le sucre cuit, comme il l'est décrit par exemple dans le brevet EP 0.630.575 dont la Demanderesse est titulaire. Le givrage consiste à appliquer en surface du sucre cuit un sirop cristallisable, le plus souvent de saccharose. La cristallisation du saccharose en surface du sucre cuit crée ainsi une barrière aux échanges aqueux. Cependant, le givrage enlève le critère de translucidité au sucre cuit givré, ce dernier ayant un aspect blanchâtre. Une autre solution consiste en une technique appelée huilage, qui est un enrobage au moyen de matières grasses du type mono et diglycérides, essentiellement destinée aux confiseries gélifiées de type généralement pharmaceutique. L'inconvénient de cette méthode est qu'elle ne crée pas une barrière efficace à l'humidité de l'air ambiant d'une part, et d'autre part qu'elle confère aux confiseries une texture grasse non adaptée notamment aux emballages cartonnés, et désagréable pour le consommateur.

La troisième solution consiste à fournir une composition de carbohydrates particulière qui permet d'obtenir un sucre cuit sans sucre stable à l'humidité et à la chaleur, et n'ayant pas tendance, au cours du temps, à devenir opaque et blanc en surface ou à coeur.

Plusieurs compositions ont été ainsi proposées. Par exemple, le brevet EP 0.561.089 dont la Demanderesse est titulaire, propose une composition de saccharides hydrogénés présentant un profil particulier et sélectionné de manière à conférer une stabilité accrue aux sucres cuits. Ceux ci ne sont toutefois pas destinés à la fabrication de sucres cuits nus, puisque les sucres cuits préparés avec ce type de composition doivent nécessairement être papillotés. D'autres solutions à base d'isomalt existent pour produire des sucres cuits suffisamment stables pour pouvoir être commercialisés sans emballages individuels.

On peut en effet utiliser des mélanges à 80% d'isomalt et 20% de sirop de maltitol, ou 20% de sirop de glucose, ou 20% de polydextrose. Ces mélanges sont toutefois coûteux.

On peut également mettre en oeuvre le procédé décrit dans le brevet EP 0.518.770 dont la Demanderesse est titulaire. Ce procédé se révèle toutefois assez compliqué.

L'invention a donc pour but de remédier aux inconvénients de l'art antérieur et de proposer un nouveau procédé d'enrobage de sucres cuits sans sucre, répondant nettement mieux aux attentes des confiseurs et aux différentes exigences de la pratique, c'est à dire possédant une stabilité nettement améliorée au stockage sans que la translucidité du sucre cuit ne soit altérée.

A l'issue de recherches approfondies, la Demanderesse a eu le mérite de trouver que ce but pouvait être atteint et que, contre toute attente, il était possible de préparer un sucre cuit sans sucre stable, en particulier non papilloté, lorsqu'il était enrobé selon un procédé approprié et particulier.

Le sucre cuit conforme à l'invention peut être qualifié de stable dans la mesure où, au cours du temps et sans emballage individuel, il n'a pas tendance :

- ni à devenir collant,
- ni à grainer, ni à tourner en devenant opaque et blanc en surface ou à coeur,
- ni à se déformer aux températures estivales habituelles aux climats tempérés.

L'enrobage est une opération unitaire employée dans bon nombre de domaines et notamment ceux de la confiserie alimentaire ou pharmaceutique. Cette opération consiste à créer un revêtement à la surface des produits que l'on souhaite protéger pour diverses raisons tout en les rendant attractifs visuellement ou gustativement.

Dans le cadre de la présente invention, on s'intéresse à une technique particulière d'enrobage qui consiste à protéger des sucres cuits sans sucre de manière à ce que ceux-ci puissent être commercialisés sans emballage individuel, sans présenter de problèmes de collage durant leur stockage. On vise ainsi la commercialisation de sucres cuits en boites carton ou en métal, sans papillotage, tout en respectant l'aspect initial du sucre cuit.

Ne sont donc pas concernées selon la présente invention, les techniques de dragéification dure ou tendre, le givrage, le sucrage, le candissage qui ne consistent pas en un revêtement dur et translucide ne modifiant pas l'aspect initial du sucre cuit.

La Demanderesse a découvert que, de façon surprenante et inattendue, en appliquant un procédé particulier d'enrobage, mettant en oeuvre avantageusement un sirop d'enrobage comprenant un polyol en tant qu'agent de remplacement du sucre, qui présente l'avantage d'être très rapide et simple à mettre en place industriellement, l'on pouvait préparer des sucres cuits enrobés de très haute qualité, non collants et n'évoluant pas en aspect ou en texture de manière significative au cours du temps.

Poursuivant ses travaux de recherche, la Demanderesse a constaté que l'emploi d'un sirop d'enrobage comprenant au moins un polyol, au moins un polymère de saccharide de haut poids moléculaire et au moins une matière grasse était un facteur essentiel permettant d'atteindre le but fixé.

La présente invention a donc pour objet un procédé d'enrobage de sucres cuits sans sucre, permettant la création d'un revêtement dur et translucide, comprenant l'application d'un sirop d'enrobage, caractérisé en ce que ledit sirop comprend au moins un polyol, au moins un polysaccharide de haut poids moléculaire et au moins une matière grasse.

Selon un mode général de réalisation de l'invention, le procédé consiste à humidifier de façon homogène la surface des sucres cuits à enrober à l'aide dudit sirop d'enrobage, et à les mettre en mouvement de manière à assurer une bonne répartition du sirop d'enrobage. Le procédé conforme à l'invention nécessite au moins une, mais de préférence deux applications dudit sirop d'enrobage.

Le sirop d'enrobage peut être appliqué sur les sucres cuits placés dans une turbine de dragéification. Celle-ci pourra avoir une forme ordinaire, c'est à dire une forme en tulipe avec un axe de révolution incliné ou bien une forme cylindrique avec un axe horizontal.

Les sucres cuits présenteront une forme de préférence ovale ou sphérique.

En ce qui concerne la composition du sucre cuit sans sucre à enrober, tous types de sirops peuvent être utilisés, sachant que l'on vise toujours à obtenir un sucre cuit suffisamment stable avant enrobage. Par exemple, on pourra préparer des sucres cuits à partir de sirops de maltitol, comme notamment le LYCASIN®HBC développé par la Demanderesse, seul ou en mélange avec du mannitol, ces sirops étant connus pour conférer une stabilité satisfaisante aux sucres cuits papillotés.

De préférence, le ou les polyols, le ou les polysaccharides de haut poids moléculaire ainsi que la ou les matières grasses sont mélangés préalablement à l'enrobage de manière à constituer ledit sirop d'enrobage.

Selon une variante avantageuse de l'invention, ledit procédé comprendra en particulier l'application d'un sirop d'enrobage comprenant au moins un polyol choisi dans le groupe constitué par le maltitol, le mannitol, l'érythritol, le lactitol et l'isomalt, et leurs mélanges.

On entend par polysaccharide de haut poids moléculaire au sens de la présente invention les gommes végétales telles que notamment les gommes arabique, adragante, ainsi que les amidons, modifiés ou non, la cellulose microcristalline et ses dérivés, susceptibles de remplir la même fonction que les gommes végétales dans un procédé selon l'invention. On vise en particulier les maltodextrines, le polydextrose, les oligosaccharides comme notamment les fructooligosaccharides, galactooligosaccharides, isomaltooligosaccharides, maltooligosaccharides, l'inuline et les maltodextrines branchées hydrogénées ou non telles que décrites dans la demande de brevet EP 1.006.128 dont la Demanderesse est titulaire, qui présentent entre 15 et 35% de liaisons glucosidiques 1-6, une teneur en sucres réducteurs inférieure à 20%, un indice de polymolécularité inférieur à 5 et une masse moléculaire moyenne en nombre Mn au plus égale à 4500 g/mole, et leurs mélanges.

Selon une autre variante du procédé selon l'invention, ledit sirop d'enrobage comprend en outre au moins un silicate. Il s'agira en particulier de silicate de magnésium encore appelé « talc » par l'homme du métier.

En ce qui concerne la matière grasse, tout type de matières grasses utilisables en confiserie alimentaire ou pharmaceutique convient bien. On peut citer à titre d'exemple la paraffine et la vaseline, seules ou en mélange entre elles.

Par matières grasses, on vise également au sens de la présente invention les cires, comme par exemple la cire d'abeille, de carnauba, de candellila, shellac et cire microcristalline.

Il va de soi que dans la pratique, en fonction des applications visées, ledit sirop d'enrobage peut comprendre également un ou plusieurs constituants choisis et ce, sans que cette liste ne soit limitative, dans le groupe comprenant les arômes, les colorants, les édulcorants intenses, les acides, les extraits de plantes, les vitamines, seuls ou en mélange entre eux.

Selon une autre variante du procédé selon l'invention, ledit sirop d'enrobage comprend au moins un sirop de maltitol de type LYCASIN®HBC tel que ceux décrits dans le brevet EP 0.561.089 dont la Demanderesse est titulaire, et au moins une matière grasse.

L'invention concerne également un sucre cuit sans sucre enrobé selon ledit procédé.

L'invention concerne en outre un sucre cuit sans sucre enrobé, caractérisé en ce que son enrobage comprend au moins un polyol, au moins un polysaccharide de haut poids moléculaire et au moins une matière grasse. Selon une variante de l'invention, l'enrobage dudit sucre cuit comprend en outre au moins un silicate et de préférence un silicate de magnésium.

A la connaissance de la Demanderesse, de tels sucres cuits sans sucre enrobés, stables au stockage sans papillotage constituent de nouveaux produits industriels.

Selon une variante avantageuse de l'invention, ledit enrobage comprend au moins un polyol choisi dans le groupe constitué par le maltitol, le mannitol, l'érythritol, le lactitol et l'isomalt, et leurs mélanges. De préférence, l'enrobage comprend du maltitol.

Le sucre cuit enrobé selon un procédé conforme à l'invention présente une stabilité au stockage accrue. Plus précisément, il présente une reprise en eau beaucoup plus faible que le sucre cuit nu.

Selon une variante avantageuse de l'invention, des résultats très significatifs, en terme notamment de stabilité, ont été obtenus en enrobant selon un procédé conforme à l'invention un sucre cuit sans sucre préparé, avant enrobage, à partir d'un sirop de maltitol. On entend par sirop de maltitol au sens de l'invention des sirops de type LYCASIN®HBC commercialisés par la Demanderesse. Selon une variante préférentielle, de très bons résultats sont obtenus en préparant des sucres cuits sans sucre, avant enrobage, à partir de mélanges desdits sirops de maltitol avec jusqu'à 10% en poids de mannitol.

L'invention vise enfin un sirop d'enrobage caractérisé en ce qu'il comprend au moins un polyol, au moins un polysaccharide de haut poids moléculaire et au moins une matière grasse.

De préférence, ledit polyol est choisi dans le groupe constitué par le maltitol, le mannitol, l'érythritol, le lactitol et l'isomalt, et leurs mélanges. Ledit sirop d'enrobage comprend avantageusement au moins 5% en poids dudit polyol, et au plus 70% en poids. Au-delà de cette teneur, on observe en effet des phénomènes de cristallisation indésirables, qui impliquent que le revêtement devient opaque.

De façon encore plus préférentielle, ledit polysaccharide est choisi dans le groupe constitué par les gommes végétales, les amidons modifiés ou non, la cellulose microcristalline et ses dérivés, le polydextrose, les oligosaccharides et les maltodextrines branchées hydrogénées ou non présentant entre 15 et 35% de liaisons glucosidiques 1-6, une teneur en sucres réducteurs inférieure à 20%, un indice de polymolécularité inférieur à 5 et une masse moléculaire moyenne en nombre Mn au plus égale à 4500 g/mole, seuls ou en mélange. Le sirop d'enrobage comprendra avantageusement 0,5 à 30% en poids dudit polysaccharide.

En ce qui concerne la matière grasse, celle-ci sera présente dans le sirop d'enrobage à hauteur de 10 à 40% en poids.

En ce qui concerne le silicate, lorsqu'il est présent, le sirop d'enrobage en comprendra de préférence 0,5 à 30% en poids.

Le sirop d'enrobage selon l'invention peut comprendre jusqu'à 40% en poids d'eau. De préférence, il en comprendra 10 à 30%, et plus préférentiellement encore 20 à 30%.

De très bons résultats ont été obtenus avec un sirop d'enrobage comprenant 30 à 50% en poids de polyols, 1 à 10% en poids de polysaccharide de haut poids moléculaire, 20 à 30% en poids de matière grasse et 5 à 15% en poids de silicate.

Le complément à 100% est constitué par de l'eau ainsi qu'éventuellement, en fonction des applications visées, tout additif couramment utilisé en confiserie, tel que les arômes, les colorants, les édulcorants intenses, les acides, les vitamines, les extraits de plantes.

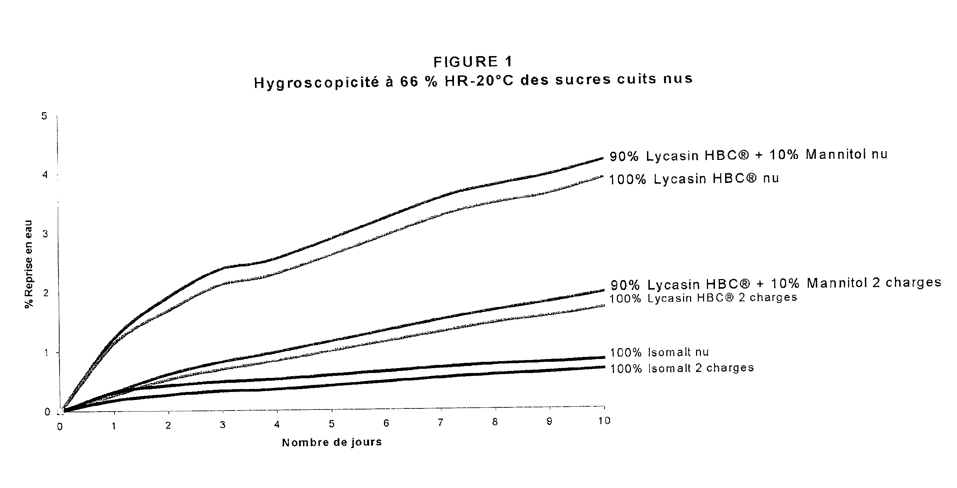

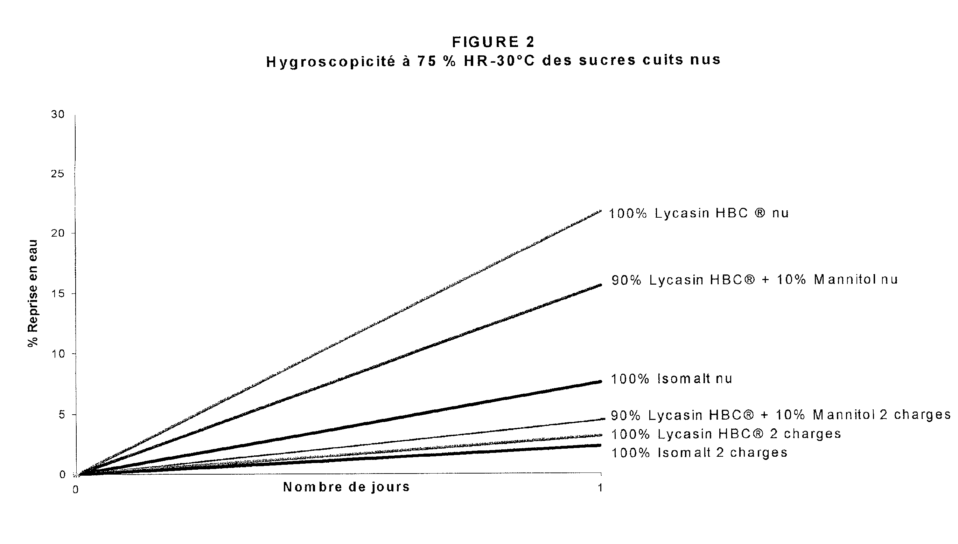

L'invention sera mieux comprise à l'aide des exemples qui suivent et des figures 1 et 2 qui s'y rapportent, qui se veulent illustratifs et non limitatifs.

## **Exemple 1**

1.Préparation des sucres cuits

| Formules : | | | | |
|---|---|---|---|---|
| Identification des sucres cuits non enrobés | Composition mise en oeuvre | Température de cuisson | Teneur en eau (%) | Température de transition vitreuse (°C) |
| T | 100 % Isomalt (témoin) | 190°C | 1,9% | 46,0°C |
| S1 | 100% LYCASIN®HBC | 153°C | 2,7% | 42,1°C |
| S2 | 90% LYCASIN®HBC 10% mannitol | 190°C | 1,7% | 45,1°C |

2.Préparation du sirop d'enrobage.

| Formule : | |
|---|---|
| - maltitol (MALTISORB® P200) | 380,0 |
| - eau | 230,0 |
| - Gomme arabique | 30,0 |
| - Talc | 120,0 |
| - Matière grasse | 240,0 |
| | 1000,0 |

Dans un mélangeur planétaire, introduire l'eau bouillante.

Ajouter la gomme arabique en poudre, mélanger 5 minutes jusqu'à homogénéisation.

Ajouter le maltitol, mélanger jusqu'à obtention d'une solution homogène.

Mélanger avec la matière grasse jusqu'à homogénéisation.

Ajouter le talc, mélanger jusqu'à obtention d'une suspension homogène.

Maintenir la suspension d'enrobage ainsi obtenue à 80°C dans un bain-marie.

3. Enrobage des sucres cuits

Introduire 200g de sucres cuits dans une turbine de dragéification.

Les préchauffer vers 30-35°C avec de l'air chaud et sec.

Sur ces sucres cuits à 30-35°C dans une turbine en rotation, ajouter 1 ml du sirop d'enrobage à 80°C. Laisser répartir 10 minutes.

Ajouter éventuellement une deuxième charge de 1 ml de sirop d'enrobage.

Laisser sécher les sucres cuits enrobés 12 heures à 50% d'humidité relative et à 20°C avant emboîtage.

Les sucres cuits enrobés sont identifiés conformément à l'exemple précédent de la manière suivante : TE, SE1 et SE2.

Aspect des sucres cuits après enrobage.

L'enrobage ne modifie pratiquement pas l'aspect des sucres cuits : ils sont translucides.

**Exemple 2**

Stabilité à 66% d'humidité relative et 20°C

On étudie la reprise en eau des sucres cuits enrobés selon l'exemple 1 en comparaison avec des sucres cuits non enrobés, tels quels ou en boites cartons, lors d'un stockage de 10 jours à 66% d'humidité relative et à 20°C.

Les résultats sont illustrés par la figure 1.

Cette figure montre que l'enrobage réduit considérablement l'hygroscopicité des sucres cuits, quelle que soit leur composition.

Conclusion : les sucres cuits enrobés selon l'invention, T, S1 et S2 ne collent pas à leur support après 10 jours, alors que les sucres cuits non enrobés selon l'art antérieur SE1 et SE2 collent à leur support.

Stabilité à 75% d'humidité relative et 30°C

On étudie la reprise en eau des sucres cuits enrobés selon l'exemple 1 en comparaison avec des sucres cuits non enrobés, tels quels ou en boites cartons, lors d'un stockage de 1 jour à 70% d'humidité relative et à 30°C.

Les résultats sont illustrés par la figure 2.

Cette figure montre que l'hygroscopicité des sucres cuits SE1 et SE2 est moins importante que le témoin sans enrobage T.

L'aspect des sucres cuits après stockage montre que les sucres cuits SE1 et SE2 sont plus beaux, car moins grainés que les sucres cuits TE.

Les sucres cuits SE1 et SE2 collent légèrement à leur support, mais pas plus que les témoins à l'isomalt.

Les études de stabilité en boîtes cartons montrent que ni SE1 ni SE2 ne collent sans emballage individuel, que ce soit à 66% HR ou à 70% HR, alors que S1 et S2 collent.

Les sucres cuits selon l'invention peuvent donc être commercialisés nus, et grainent moins que des sucres cuits à l'isomalt.

**Revendications**

**1.** Procédé d'enrobage de sucres cuits sans sucre, permettant la création d'un revêtement dur et translucide, comprenant l'application d'un sirop d'enrobage, **caractérisé en ce que** ledit sirop comprend au moins un polyol choisi dans le groupe constitué par le maltitol, le mannitol, l'érythritol, le lactitol et l'isomalt, seuls ou en mélange, au moins un polysaccharide de haut poids moléculaire et 10 à 40% en poids d'au moins une matière grasse.

**2.** Procédé d'enrobage selon la revendication 1 **caractérisé en ce que** ledit sirop d'enrobage comprend en outre au moins un silicate.

**3.** Procédé selon l'une ou l'autre des revendications 1 et 2, **caractérisé en ce que** le polysaccharide de haut poids moléculaire est choisi dans le groupe constitué par les gommes végétales, les amidons modifiés ou non, la cellulose microcristalline et ses dérivés, le polydextrose, les oligosaccharides et les maltodextrines branchées hydrogénées ou non présentant entre 15 et 35% de liaisons glucosidiques 1-6, une teneur en sucres réducteurs inférieure à 20%, un indice de polymolécularité inférieur à 5 et une masse moléculaire moyenne en nombre Mn au plus égale à 4500 g/mole, seuls ou en mélange.

**4.** Procédé d'enrobage selon l'une quelconque des revendications 1 à 3, **caractérisé en ce que** ledit sirop d'enrobage comprend du maltitol.

**5.** Procédé selon l'une quelconque des revendications 2 à 4, **caractérisé en ce que** le silicate est un silicate de magnésium.

**6.** Sucre cuit sans sucre enrobé selon un procédé conforme à l'une quelconque des revendications 1 à 5.

**7.** Sucre cuit sans sucre enrobé, **caractérisé en ce que** son enrobage est dur et translucide et comprend au moins un polyol choisi dans le groupe constitué par le maltitol, le mannitol, l'érythritol, le lactitol et l'isomalt, seuls ou en mélange, au moins un polysaccharide de haut poids moléculaire et 10 à 40% d'au moins une matière grasse.

**8.** Sucre cuit selon la revendication 7, **caractérisé en ce que** son enrobage comprend en outre au moins un silicate.

**9.** Sucre cuit selon l'une quelconque des revendications 6 à 8, **caractérisé en ce qu'**il est préparé, avant enrobage, à partir d'un sirop de maltitol en mélange avec au plus 10% en poids de mannitol.

**10.** Sirop d'enrobage **caractérisé en ce qu'**il comprend au moins un polyol choisi dans le groupe constitué par le maltitol, le mannitol, l'érythritol, le lactitol et l'isomalt, seuls ou en mélange, au moins un polysaccharide de haut poids moléculaire et 10 à 40% en poids d'au moins une matière grasse.

**12.** Sirop d'enrobage selon la revendication 10, **caractérisé en ce que** ledit polysaccharide est choisi dans le groupe constitué par les gommes végétales, les amidons modifiés ou non, la cellulose microcristalline et ses dérivés, le polydextrose, les oligosaccharides et les maltodextrines branchées hydrogénées ou non présentant entre 15 et 35% de liaisons glucosidiques 1-6, une teneur en sucres réducteurs inférieure à 20%, un indice de polymolécularité inférieur à 5 et une masse moléculaire moyenne en nombre Mn au plus égale à 4500 g/mole, seuls ou en mélange.

**13.** Sirop d'enrobage selon l'une quelconque des revendications 10 à 12, **caractérisé en ce qu'**il comprend 30 à 50% en poids d'au moins un polyol choisi dans le groupe constitué par le maltitol, le mannitol, l'érythritol, le lactitol et l'isomalt, seuls ou en mélange, 1 à 10% en poids de polysaccharide de haut poids moléculaire, 20 à 30% en poids de matière grasse et 5 à 15% en poids de silicate.

FIGURE 1

Hygroscopicité à 66 % HR-20°C des sucres cuits nus

**FIGURE 2**
**Hygroscopicité à 75 % HR-30°C des sucres cuits nus**

% Reprise en eau

100% Lycasin HBC ® nu

90% Lycasin HBC® + 10% Mannitol nu

100% Isomalt nu

90% Lycasin HBC® + 10% Mannitol 2 charges
100% Lycasin HBC® 2 charges
100% Isomalt 2 charges

Nombre de jours

Office européen
des brevets

**RAPPORT DE RECHERCHE EUROPEENNE**

Numéro de la demande

EP 02 29 0370

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 105 801 A (DOGLIOTTI AMILCARE) 8 août 1978 (1978-08-08) | 1,3,6,7, 10,12 | A23G3/00 |
| Y | | 2,4,5,8, 9,13 | |
| | * colonne 3, ligne 32 - ligne 68; revendications 1,2,9,21-24 * <br> * colonne 2, ligne 30 - ligne 24 * <br> * colonne 2, ligne 27 - ligne 29 * <br> * colonne 2, ligne 31 - ligne 56 * <br> --- | | |
| Y | WO 95 07621 A (WRIGLEY W M JUN CO) 23 mars 1995 (1995-03-23) <br> * page 12, ligne 19 - ligne 25 * <br> --- | 2,4,5,8, 9,13 | |
| Y | US 4 423 086 A (DEVOS FRANCIS ET AL) 27 décembre 1983 (1983-12-27) <br><br> * colonne 1, ligne 25 - ligne 43 * <br> * colonne 2, ligne 7 - ligne 11 * <br> * colonne 4, ligne 50 - ligne 59 * <br> * colonne 2, ligne 1 - ligne 41 * <br> * colonne 4, ligne 49 - colonne 5, ligne 16 * <br> * colonne 9, ligne 15 - ligne 60 * <br> --- | 1,3,4,6, 7,9,10, 12,13 | |
| Y | US 5 478 593 A (SERPELLONI MICHEL ET AL) 26 décembre 1995 (1995-12-26) <br><br> * colonne 6, ligne 24 - ligne 27; revendications 1,6,7; exemples * <br> * colonne 5, ligne 44 - ligne 50 * <br> * colonne 1, ligne 39 - ligne 49 * <br> * colonne 4, ligne 61 - ligne 65 * <br> --- <br> -/-- | 1,3,4,6, 7,9,10, 12,13 | |

**DOMAINES TECHNIQUES RECHERCHES (Int.Cl.7)**

A23G

Le présent rapport a été établi pour toutes les revendications

| Lieu de la recherche | Date d'achèvement de la recherche | Examinateur |
|---|---|---|
| LA HAYE | 27 mai 2002 | Guyon, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 1 234 506 A1**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 273 000 A (WARNER LAMBERT CO) 29 juin 1988 (1988-06-29) * page 4, ligne 10 - ligne 16; revendications 11,13,16,20,27,29 * * page 4, ligne 64 - page 6, ligne 14 * | 1-13 | |
| D,A | US 5 527 542 A (SERPELLONI MICHEL ET AL) 18 juin 1996 (1996-06-18) * colonne 7, ligne 62 - ligne 65; revendications 1,5,6,8,9; exemples * & EP 0 630 575 A 28 décembre 1994 (1994-12-28) | 1-13 | |
| A | US 4 317 838 A (CHERUKURI SUBRAMAN R ET AL) 2 mars 1982 (1982-03-02) * le document en entier * | 1 | |
| | | | **DOMAINES TECHNIQUES RECHERCHES** (Int.Cl.7) |

Le présent rapport a été établi pour toutes les revendications

| Lieu de la recherche | Date d'achèvement de la recherche | Examinateur |
|---|---|---|
| LA HAYE | 27 mai 2002 | Guyon, R |

**EP 1 234 506 A1**

ANNEXE AU RAPPORT DE RECHERCHE EUROPEENNE
RELATIF A LA DEMANDE DE BREVET EUROPEEN NO. EP 02 29 0370

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-05-2002

| Document brevet cité au rapport de recherche | Date de publication | Membre(s) de la famille de brevet(s) | Date de publication |
|---|---|---|---|
| US 4105801 A | 08-08-1978 | IT 1058757 B | 10-05-1982 |
| | | AT 352515 B | 25-09-1979 |
| | | AT 141077 A | 15-02-1979 |
| | | AU 2292277 A | 06-04-1978 |
| | | BE 851952 A1 | 01-07-1977 |
| | | CH 631075 A5 | 30-07-1982 |
| | | DE 2708215 A1 | 08-09-1977 |
| | | DK 91477 A ,B, | 06-09-1977 |
| | | FR 2342668 A1 | 30-09-1977 |
| | | GB 1513715 A | 07-06-1978 |
| | | IE 44636 B1 | 10-02-1982 |
| | | NL 7702167 A | 07-09-1977 |
| | | SE 7702385 A | 06-09-1977 |
| WO 9507621 A | 23-03-1995 | WO 9507621 A1 | 23-03-1995 |
| | | AU 679695 B2 | 10-07-1997 |
| | | AU 5161893 A | 03-04-1995 |
| | | DE 69327595 D1 | 17-02-2000 |
| | | DE 69327595 T2 | 08-06-2000 |
| | | DK 719092 T3 | 01-05-2000 |
| | | EP 0719092 A1 | 03-07-1996 |
| US 4423086 A | 27-12-1983 | FR 2467597 A1 | 30-04-1981 |
| | | AU 537832 B2 | 12-07-1984 |
| | | AU 6390580 A | 07-05-1981 |
| | | CA 1168082 A1 | 29-05-1984 |
| | | DE 3066710 D1 | 29-03-1984 |
| | | DK 262181 A ,B, | 15-06-1981 |
| | | EP 0037407 A1 | 14-10-1981 |
| | | ES 496044 D0 | 16-04-1982 |
| | | ES 8203198 A1 | 01-07-1982 |
| | | FI 811850 A ,B, | 12-06-1981 |
| | | WO 8101100 A1 | 30-04-1981 |
| | | IE 50168 B1 | 19-02-1986 |
| | | IT 1133715 B | 09-07-1986 |
| | | JP 1026661 B | 24-05-1989 |
| | | JP 56501365 T | 24-09-1981 |
| | | NO 811994 A | 12-06-1981 |
| | | NO 157484 B | 21-12-1987 |
| | | BE 885778 A1 | 17-04-1981 |
| | | CH 645782 A5 | 31-10-1984 |
| US 5478593 A | 26-12-1995 | FR 2705207 A1 | 25-11-1994 |
| | | AT 174475 T | 15-01-1999 |
| | | AU 698144 B2 | 22-10-1998 |
| | | AU 1241997 A | 20-03-1997 |

Pour tout renseignement concernant cette annexe : voir Journal Officiel de l'Office européen des brevets, No.12/82

**ANNEXE AU RAPPORT DE RECHERCHE EUROPEENNE**
**RELATIF A LA DEMANDE DE BREVET EUROPEEN NO.**　　　　EP 02 29 0370

27-05-2002

| Document brevet cité au rapport de recherche | Date de publication | Membre(s) de la famille de brevet(s) | | Date de publication |
|---|---|---|---|---|
| US 5478593 A | | AU | 677304 B2 | 17-04-1997 |
| | | AU | 6311094 A | 24-11-1994 |
| | | CA | 2123651 A1 | 18-11-1994 |
| | | DE | 69415209 D1 | 28-01-1999 |
| | | DE | 69415209 T2 | 17-06-1999 |
| | | DK | 625311 T3 | 23-06-1999 |
| | | EP | 0625311 A1 | 23-11-1994 |
| | | ES | 2126077 T3 | 16-03-1999 |
| | | FI | 942267 A | 18-11-1994 |
| | | GR | 3029350 T3 | 28-05-1999 |
| | | JP | 7132051 A | 23-05-1995 |
| | | NO | 941836 A | 18-11-1994 |
| | | US | 5571547 A | 05-11-1996 |
| EP 0273000 A | 29-06-1988 | US | 4828845 A | 09-05-1989 |
| | | DE | 3772735 D1 | 10-10-1991 |
| | | EP | 0273000 A1 | 29-06-1988 |
| | | GR | 3002646 T3 | 25-01-1993 |
| | | HK | 85594 A | 26-08-1994 |
| | | JP | 1806774 C | 10-12-1993 |
| | | JP | 5014535 B | 25-02-1993 |
| | | JP | 63167743 A | 11-07-1988 |
| | | JP | 2081618 C | 23-08-1996 |
| | | JP | 5244872 A | 24-09-1993 |
| | | JP | 7089871 B | 04-10-1995 |
| | | PT | 84796 A ,B | 01-05-1987 |
| | | ZA | 8702848 A | 25-11-1987 |
| US 5527542 A | 18-06-1996 | FR | 2705208 A1 | 25-11-1994 |
| | | AT | 187872 T | 15-01-2000 |
| | | AU | 676725 B2 | 20-03-1997 |
| | | AU | 6311394 A | 24-11-1994 |
| | | CA | 2123650 A1 | 18-11-1994 |
| | | DE | 69422224 D1 | 27-01-2000 |
| | | DE | 69422224 T2 | 13-07-2000 |
| | | DK | 630575 T3 | 22-05-2000 |
| | | EP | 0630575 A1 | 28-12-1994 |
| | | ES | 2142389 T3 | 16-04-2000 |
| | | FI | 942268 A | 18-11-1994 |
| | | GR | 3032907 T3 | 31-07-2000 |
| | | JP | 7123959 A | 16-05-1995 |
| | | NO | 941837 A | 18-11-1994 |
| | | PT | 630575 T | 30-06-2000 |
| US 4317838 A | 02-03-1982 | AU | 534011 B2 | 22-12-1983 |
| | | AU | 6016680 A | 14-01-1982 |

**ANNEXE AU RAPPORT DE RECHERCHE EUROPEENNE
RELATIF A LA DEMANDE DE BREVET EUROPEEN NO.**   EP 02 29 0370

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-05-2002

| Document brevet cité au rapport de recherche | Date de publication | Membre(s) de la famille de brevet(s) | Date de publication |
|---|---|---|---|
| US 4317838 A | | BE 884317 A1 | 15-01-1981 |
| | | DE 3025646 A1 | 28-01-1982 |
| | | FR 2486364 A1 | 15-01-1982 |
| | | GB 2079129 A ,B | 20-01-1982 |
| | | ZA 8005473 A | 30-09-1981 |

EPO FORM P0460

Pour tout renseignement concernant cette annexe : voir Journal Officiel de l'Office européen des brevets, No.12/82